# EUROPEAN PATENT APPLICATION

(11) **EP 3 476 207 A1**
(43) Date of publication of application: **01.05.2019**
(21) Application number: 17819393.4
(22) Date of filing: 17.05.2017
(51) Int. Cl.: A01G 9/029

(54) **SEED TRAY**

(30) Priority: 27.06.2016 ES 201630832 U
(71) Applicant: Ruiz Carmona, Manuel, 03190 Pilar de la Horadada (Alicante) (ES)
(72) Inventor: Ruiz Carmona, Manuel, 03190 Pilar de la Horadada (Alicante) (ES)
(74) Representative: Ungria López, Javier
(86) International application number: PCT/ES2017/070319
(87) International publication number: WO 2018/002393

(57) **Abstract**

The invention relates to a seed tray comprising an upper support (3) from which a number of cavities (1) originate, said cavities having lateral walls, bases (6) and openings (5) located corresponding to said upper support (3). The upper support (3) comprises through-openings (4) located in zones where groups of four cavities (1) come together. The seed tray according to the invention is intended for the growth and transportation of seedlings accommodated inside the cavities, wherein the object of the invention is to improve the ventilation and particularly the brightness among the different cavities in order to thereby achieve an optimum growth of the seedlings.

## Description

### Object of the invention

The present invention, as expressed in the title of this specification, relates to a seed tray intended for the growth and transportation of seedlings accommodated inside cavities, wherein the object of the invention is to improve the ventilation and particularly the brightness among the different cavities in order to thereby achieve an optimum growth of the seedlings.

### Technical problem to be solved and background of the invention

In the current state of the art, seed trays are known that are manufactured with expanded polystyrene material, which even though they are very light-weight, do not provide good ventilation and brightness for the correct growth of the seedlings.

Another drawback is that problems arise with the roots of the seedlings taking hold as the seed trays have an excessively porous surface that favours the adherence of said roots, and therefore, problems for carrying out the extraction of the seedlings.

In order to prevent this problem, other seed trays are combined with plastic sheets that cover the cavities where the seedlings are located, whether independently or even thermoforming said sheet on a polyester support, from which the respective seed tray is then obtained.

In any case, these seed trays do not suitably use the plane surface that they have, meaning that the number of seedlings that can be accommodated is certainly improvable.

Spanish utility model with publication No. ES 1027812 U relates to a seed tray comprising frusto-pyramidal cavities; wherein the base of each cavity includes a central cut-out that extends through the areas next to the lateral faces of the cavity in order to facilitate the drainage of the plant.

Spanish utility model with publication No. ES 1029898 U relates to an independent cover for the alveolar cavities of a seed tray. The independent cover comprises several portions joined by narrow strips by way of hinges or fold lines; said portions constituting the lateral walls that are adapted against the inner faces of the alveolar cavities of the seed tray.

Spanish patent for invention with publication No. ES 2523460 relates to a perfected thermoformed seed tray comprising a flat upper sheet and lateral walls arranged on the entire perimeter thereof, such that two or more alveolar cavities are arranged on the upper sheet where at least one of the lateral faces of the alveolar cavities is joined to at least one of the lateral faces of the adjacent alveolar cavities.

### Description of the invention

In order to reach the objectives and prevent the aforementioned drawbacks, the invention proposes a seed tray comprising an upper support from which a number of cavities originate, the cavities having lateral walls, bases and openings levelled with the upper support.

The upper support comprises through-openings located in zones where groups of four cavities come together; wherein said through-openings enable improved ventilation and particularly greater brightness in inner spaces located among the different cavities. In the embodiment shown in the figures, the cavities have an octagonal plane shape, without other plane shapes of the cavities being ruled out.

The through-openings are delimited by edges that are parallel to pairs of opposing edges of the cavities; wherein said through-openings have a quadrangular shape.

The seed tray further comprises a perimeter skirt with a hollow structure; wherein a portion of said perimeter skirt forms part of the upper support of the seed tray. The perimeter skirt includes edges with rounded corners.

Furthermore, the perimeter skirt has a height selected from a height greater than the cavities, a height smaller than the cavities and a height equal to the cavities.

Each of the cavities of the seed tray becomes progressively narrower towards the base thereof, forming a frustoconical structure; wherein several frustoconical sections are formed with different degrees of inclination. The join between the different frustoconical sections of the cavities is a join with rounded corners.

The structure of the seed tray is reinforced by means of a set of partitions integral to upper portions of the laterals walls of the cavities and to the upper support of the seed tray.

For the purpose of helping to make this specification more readily understandable, a set of drawings constituting an integral part of the same has been included below, wherein by way of illustration and not limitation the object of the invention has been represented.

### Brief description of the figures

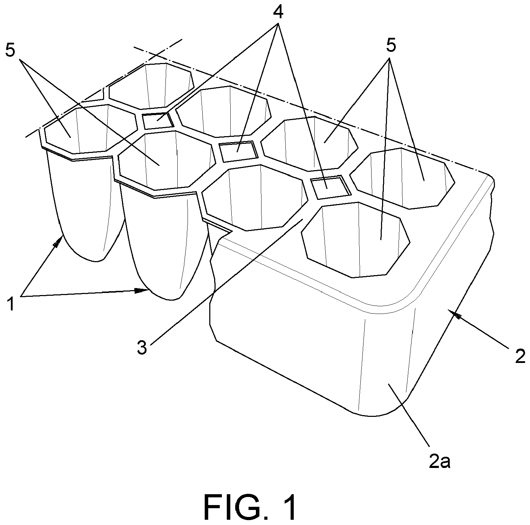

**Figure 1****.-** Shows a perspective view of a portion of the seed tray, object of the invention.

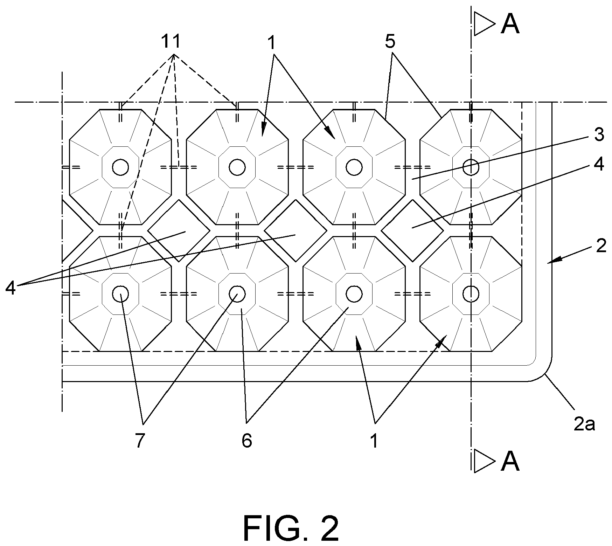

**Figure 2****.-** Shows a plan view of that shown in figure 1.
**Figure 3****.-** Shows a cross-sectional elevation view according to the cut A-A of figure 2.
**Figure 4****.-** Shows an elevation view of a portion of that shown in figure 3.

### Description of an exemplary embodiment of the invention

Pursuant to the numbering used in the figures, the seed tray is manufactured with a plastic material, by injection, thermoforming, etc., which ensures an optimum dimensional stability for the filling thereof in automatic machines that require great accuracy when placing seedlings in cavities 1 of the seed tray.

The seed tray comprises a perimeter skirt 2 with a hollow structure in combination with a set of cavities 1 that originate from an upper support 3 having a perimeter portion that forms part of the perimeter skirt 2.

The perimeter skirt 2 has rounded corners 2a in order to improve the ergonomics thereof, and therefore, the handling thereof by the operator's hands.

The cavities 1 have an octagonal-shaped plane shape, which enables an improved use of the space of the seed tray, allowing for more seedlings in the same dimension of seed tray.

The upper support 3 of the seed tray includes through-openings 4; wherein for each group of four cavities 1, a through-opening 4 is created in the centre thereof that constitutes a hole for ventilation and for the passage of brightness that significantly favours the optimum growth of the seedlings, significantly reducing the risk of contracting diseases (botrytis, etc.).

The shape itself of the cavity 1, as well as the lateral wall structure thereof manufactured from plastic material, enables seed trays to be manufactured with cavities 1 with thinner lateral walls; thereby achieving a greater capacity for the peat or substrate, which also contributes to improving the quality of the seedlings.

The cavities 1 become progressively narrower from the openings 5 to bases 6 of said cavities 1; wherein said openings 5 are located corresponding to the upper support 3 of the seed tray. Each one of said bases 6 of the cavities 1 includes a through-hole 7 to facilitate the drainage of the respective seedling.

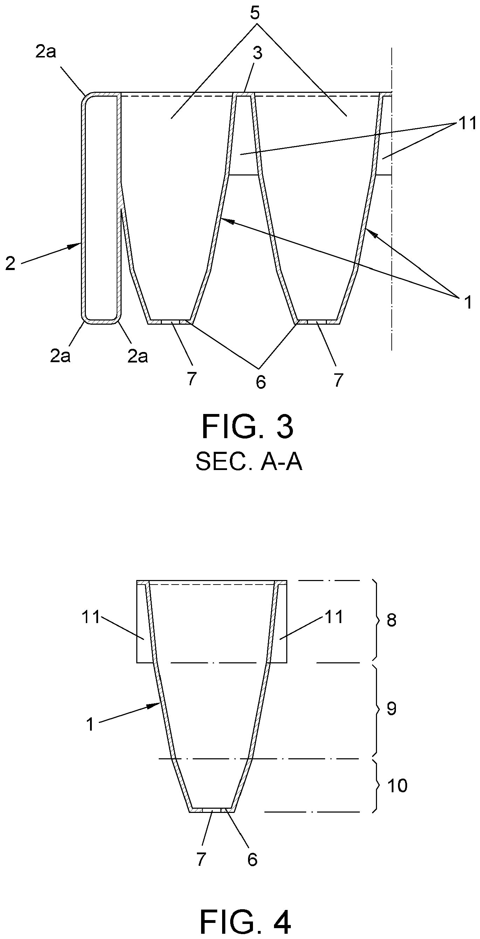

Each one of the cavities 1 becomes narrower towards the base 6 thereof forming a frustoconical structure, but wherein several frustoconical sections 8, 9, 10 are distinguished with different degrees of inclination, as shown more clearly in figure 4.

These different inclinations improve the removal of the seedlings when they are extracted in order to then be definitively placed in the ground, undoubtedly also aided by the fact that the seed tray is manufactured with a plastic material with low porosity, and therefore not being prone to the roots taking hold, hindering the removal thereof as is the case of conventional seed trays.

The join between the different frustoconical sections is a smooth join with rounded corners, avoiding sharp angled corners, thereby facilitating the extraction of the plants.

The structure of the seed tray is reinforced by means of a set of partitions 11 integral to the upper portions of the laterals walls of the cavities 1 and to the upper support 3 of the seed tray.

## Claims

1. A **seed tray** comprising an upper support (3) from which a number of cavities (1) originate, said cavities having lateral walls, bases (6) and openings (5) levelled with said upper support (3); **characterised in that** the upper support (3) comprises through-openings (4) located in zones where groups of four cavities (1) come together.

2. The **seed tray** according to claim 1, **characterised in that** the cavities (1) have an octagonal plane shape.

3. The **seed tray** according to claim 2, **characterised in that** the through-openings (4) are delimited by edges that are parallel to pairs of opposing edges of the cavities (1).

4. The **seed tray** according to claim 3, **characterised in that** the through-openings (4) have a quadrangular shape.

5. The **seed tray** according to claim 1, **characterised in that** it comprises a perimeter skirt (2) with a hollow structure; wherein a portion of said perimeter skirt (2) forms part of the upper support (3) of the seed tray.

6. The **seed tray** according to claim 5, **characterised in that** the perimeter skirt (2) has a height greater than the cavities (1).

7. The **seed tray** according to claim 5, **characterised in that** the perimeter skirt (2) has a height smaller than the cavities (1).

8. The **seed tray** according to claim 5, **characterised in that** the perimeter skirt (2) has a height equal to the cavities (1).

9. The **seed tray** according to claim 5, **characterised in that** the perimeter skirt (2) includes edges with rounded corners (2a).

10. The **seed tray** according to claim 2, **characterised in that** each of the cavities (1) becomes progressively narrower towards the base (6) thereof, forming a frustoconical structure; wherein several frustoconical sections are formed with different degrees of inclination.

11. The **seed tray** according to claim 10, **characterised in that** the join between the different frustoconical sections of the cavities (1) is a join with rounded corners.

12. The **seed tray** according to claim 1, **characterised in that** the structure of the seed tray is reinforced by means of a set of partitions (11) integral to upper portions of the laterals walls of the cavities (1) and to the upper support (3) of the seed tray.
